# DEMANDE DE BREVET EUROPEEN

(11) **EP 4 395 187 A1**
(43) Date de publication de la demande: **03.07.2024**
(21) Numéro de dépôt: 23219640.2
(22) Date de dépôt: 22.12.2023
(51) Int. Cl.: H04B 5/00, H04B 5/72, H04B 5/77

(54) **PROTECTION D'UNE TRANSACTION**

(30) Priorité: 02.01.2023 FR 2300007
(71) Demandeur: STMicroelectronics (Rousset) SAS, 13790 Rousset (FR); PROTON WORLD INTERNATIONAL N.V., 1831 Diegem (BE)
(72) Inventeur: VAN NIEUWENHUYZE, Olivier, 1970 WEZEMBEEK-OPPEM (BE); CHARLES, Alexandre, 13390 AURIOL (FR)
(74) Mandataire: Thibon, Laurent

(57) **Abrégé**

La présente description concerne un dispositif électronique (201) comprenant un processeur (2011) hébergeant une application (2014), un module de communication en champ proche (2012), et un élément sécurisé (2012) distinct du processeur (2011), dans lequel le module de communication en champ proche (2012) est configuré pour identifier le type d'un terminal (203) émettant une trame d'interrogation, à destination de ladite application (2014), que le module de communication reçoit en analysant le type de ladite trame d'interrogation, ledit dispositif (201) étant configuré pour comparer le résultat de ladite analyse avec au moins une commande reçue de la part dudit terminal (203) pendant la mise en oeuvre d'une transaction NFC.

## Description

### Domaine technique

La présente description concerne de façon générale les dispositifs électroniques, et de façon plus particulière les dispositifs électroniques adaptés à traiter des données secrètes. Plus particulièrement, la présente description concerne des dispositifs électroniques adaptés à mettre en oeuvre une communication en champ proche (NFC, Near Field Communication), et en particulier une transaction NFC, dans laquelle au moins une partie des données échangées sont des données secrètes et/ou une partie des données échangées sont des données sensibles permettant, par exemple, un procédé d'identification ou d'authentification d'un utilisateur.

### Technique antérieure

Les dispositifs électroniques complexes, tels que les téléphones portables, les tablettes électroniques, les ordinateurs, etc., intègrent, au fil du temps, de plus en plus de fonctionnalités et permettent la mise en place de services numériques et/ou digitaux afin de s'intégrer au mieux à la vie quotidienne. A titre d'exemple, certains téléphones portables, et plus particulièrement des téléphones intelligents (smartphones), intègrent des services digitaux tels qu'un service de paiement bancaire, ou encore un service d'utilisation de titres de transport en commun, de billets de spectacle, une authentification de l'utilisateur auprès d'un système à distance (bancaire, administration publique, etc.). Pour mettre en oeuvre ces fonctionnalités, ces appareils peuvent intégrer des composants électroniques spécifiques à ces fonctionnalités, comme par exemple des composants sécurisés qui permettent de conserver/stocker des informations d'identification, de référence et d'authentification, généralement désignées par "credentials", et des ressources (assets) du fournisseur du service digital, des capteurs de mouvement, un module de communication en champ proche (Near Field Communication, NFC), etc.

Une difficulté découlant de l'ajout de nouvelles fonctionnalités, est que des données secrètes et/ou des données sensibles peuvent être rendues accessibles par erreur.

### Résumé de l'invention

Il existe un besoin pour un dispositif électronique adapté à mettre en oeuvre une transaction NFC de façon plus sécurisée.

Il existe un besoin pour un dispositif électronique adapté à détecter un dispositif malveillant essayant d'entamer une transaction NFC.

Un mode de réalisation pallie tout ou partie des inconvénients des dispositif électronique connus mettant en oeuvre des transactions NFC.

Un mode de réalisation prévoit un dispositif électronique adapté à analyser une trame d'émission d'un terminal pour vérifier l'authenticité dudit terminal.

Un mode de réalisation prévoit un dispositif électronique comprenant un processeur hébergeant une application, un module de communication en champ proche, et un élément sécurisé distinct du processeur, dans lequel le module de communication en champ proche est configuré pour identifier le type d'un terminal émettant une trame d'interrogation, à destination de ladite application, que le module de communication reçoit en analysant le type de ladite trame d'interrogation, ledit dispositif étant configuré pour comparer le résultat de ladite analyse avec au moins une commande reçue de la part dudit terminal pendant la mise en oeuvre d'une transaction NFC.

Un autre mode de réalisation prévoit un procédé de protection d'un dispositif électronique comprenant un processeur hébergeant une application, un module de communication en champ proche, et un élément sécurisé distinct du processeur, ledit procédé comprenant les étapes successives suivantes lors de la mise en oeuvre d'une transaction :
- ledit module de communication en champ proche identifie le type d'un terminal émettant une trame d'interrogation, à destination de ladite application, qu'il reçoit en analysant le type de ladite trame d'interrogation ;
- ledit dispositif compare le résultat de ladite analyse avec au moins une commande reçue de la part dudit terminal pendant la mise en oeuvre d'une transaction NFC.

Selon un mode de réalisation, une fois que ladite comparaison est effectuée, ladite au moins une commande est transmise à ladite application avec le résultat de la comparaison.

Selon un mode de réalisation, une fois que ladite comparaison est effectuée, le résultat de ladite analyse est transmis à l'application avec ladite au moins une commande et ledit résultat de la comparaison.

Selon un mode de réalisation, ladite application est configurée pour prendre la décision de répondre ou non à ladite au moins une commande.

Selon un mode de réalisation, ledit module de communication en champ proche comprend un circuit d'antenne adapté aux radiofréquences, ledit circuit étant configuré pour identifier le type d'un terminal émettant une trame d'interrogation, à destination de ladite application, qu'il reçoit en analysant le type de ladite trame d'interrogation.

Selon un mode de réalisation, ledit élément sécurisé est configuré pour comparer le type de terminal avec ladite au moins une commande reçue.

Selon un mode de réalisation, ledit module de communication en champ proche est, en outre, configuré pour comparer le type de terminal avec ladite au moins une commande reçue.

Selon un mode de réalisation, ledit module de communication en champ proche est, en outre, configurée pour envoyer des données erronées à l'expéditeur si le résultat de ladite comparaison indique que le type de l'expéditeur n'est pas fiable.

Selon un mode de réalisation, si le résultat de ladite comparaison indique que le type de l'expéditeur n'est pas fiable, ladite au moins une application refuse d'envoyer des données sensibles.

Selon un mode de réalisation, ladite comparaison est réalisée en comparant ledit résultat de ladite analyse avec au moins deux commandes reçues de la part dudit terminal pendant la mise en oeuvre d'une transaction NFC.

Selon un mode de réalisation, ladite comparaison est réalisée, en outre, en interrogeant un utilisateur dudit dispositif.

Selon un mode de réalisation, ledit processeur héberge, en outre, au moins une couche logicielle d'interface adaptée à mettre en oeuvre ladite au moins une application.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un exemple de réalisation d'une transaction sans fil ;
la figure 2 représente très schématiquement et sous forme de blocs, un mode de réalisation d'un dispositif électronique ;
la figure 3 représente un schéma-bloc illustrant un premier mode de mise en oeuvre d'un procédé de protection du mode de réalisation de la figure 3 ; et
la figure 4 représente un schéma-bloc illustrant un deuxième mode de mise en oeuvre d'un procédé de protection du mode de réalisation de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les protocoles utilisés pour mettre en oeuvre les communications sans fil ne sont pas détaillés ici. Les protocoles usuels peuvent être utilisés ici.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

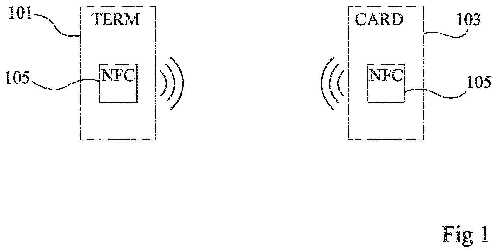

La figure 1 illustre, très schématiquement et sous forme de blocs, une transaction NFC entre un dispositif 101 (TERM) électronique servant de terminal mobile, ou terminal mobile 101, et un dispositif 103 (CARD) électronique servant de module distant, ou module distant 103, aussi appelée dispositif carte 103.

On appelle transaction ici une communication particulière dont la finalité est une opération commerciale et/ou monétaire dans lequel un dispositif, le terminal 101, est le terminal de "paiement" qui met en oeuvre la transaction et l'autre dispositif, le module distant 103, est celui qui accepte ou non la transaction. Un exemple de transaction concernée par les modes de réalisation décrits ci-après est une transaction bancaire. Un autre exemple de transaction concernée est l'achat d'un titre de transport. D'autres types de transactions sont envisageables, et les deux exemples cités précédemment ne sont pas limitatifs. La transaction NFC concernée ici est particulièrement une transaction dans laquelle les deux dispositifs sont susceptibles d'échanger des données sensibles et/ou secrètes.

Une transaction NFC est une communication sans fil et sans contact utilisant, pour sa mise en oeuvre, une technologie de communication en champ proche, appelée ci-après communication NFC. Les technologies de communication en champ proche (NFC - Near Field Communication) permettent de réaliser des communications à haute fréquence et à courte portée. De tels systèmes exploitent un champ électromagnétique radiofréquence émis par un dispositif (terminal ou lecteur) pour communiquer avec un autre dispositif (module distant, transpondeur ou carte).

On suppose le cas de deux dispositifs électroniques, par exemple le terminal 101 et le module distant 103, mais tout ce qui va être décrit s'applique plus généralement à tout système dans lequel un transpondeur capte un champ électromagnétique rayonné par un lecteur, borne ou terminal. Dans ce type de communication, les dispositifs électroniques 101 et 103 sont positionnés à portée l'un de l'autre, c'est-à-dire à une distance généralement inférieure à 10 cm. Selon un autre exemple, les dispositifs 101 et 103 sont en contact mécanique l'un avec l'autre.

Selon les applications, pour une communication NFC, un des dispositifs, le terminal 101, fonctionne en mode dit lecteur tandis que l'autre, le module distant 103, fonctionne en mode dit carte, ou les deux dispositifs communiquent en mode poste à poste (peer to peer - P2P). Chaque dispositif 101, 103 comporte divers circuits électroniques 105 (NFC) adaptés à émettre un signal radiofréquence (RF) transmis à l'aide d'une antenne d'un circuit oscillant/résonnant. Le champ radiofréquence généré par l'un des dispositifs, par exemple le terminal 101, est capté par l'autre dispositif, par exemple le module distant 103, qui se trouve à portée et qui comporte également une antenne. Lorsque le terminal 101 émet un champ électromagnétique pour initier une communication avec le module distant 103, ce champ est capté par le module distant 103 dès qu'il se trouve à portée. Une procédure d'établissement de communication est alors entamée, mettant en oeuvre des émissions de requêtes par le terminal 101 et de réponses par le module distant 103.

Plus particulièrement, lorsque le terminal 101 émet un champ électromagnétique pour initier une communication avec le module distant 103, il émet plus précisément une trame d'interrogation, aussi appelée séquence d'interrogation, séquence de polling, trame d'attente active, ou séquence d'attente active. Une trame d'interrogation est une série de données et/ou de commandes émise par le terminal 101 pour initier une communication NFC. La trame d'interrogation comprend généralement des données d'identification du terminal 101 mais aussi des données sur le type de communication NFC qu'est prêt à recevoir le terminal 101. Ainsi, une trame d'interrogation est caractérisée par le terminal qui l'émet et par le type de module distant à qui elle s'adresse. Les trames d'interrogation émises par des terminaux sont, pour la plupart, définies par des normes et permettent de caractériser un terminal et/ou une communication mise en oeuvre par ce terminal. Les trames d'interrogation sont généralement répétées jusqu'à ce qu'un module distant ne réponde. Une trame d'interrogation peut être caractérisée par les données qu'elle véhicule, mais aussi par ses caractéristiques temporelles, comme la durée de la trame d'interrogation ou les durée d'attente entre deux trames d'interrogation successives, ou par les caractéristiques physiques du champ électromagnétique qui la transmet, par exemple sa puissance. Selon un exemple, les protocoles d'émission des trames d'émission sont mis en oeuvre par des machines d'état.

Selon un exemple particulier, certains terminaux peuvent émettre des trames successives concernant des types de modules distants différents. Ainsi, si un module distant essaye d'entrer en communication avec l'un de ses terminaux, en répondant à toutes les trames d'interrogation, même les trames d'interrogation qui ne le concerne pas, que le terminal peut détecter. Cela peut permettre au terminal de détecter un module distants malveillants, et ainsi de s'en protéger, par exemple, en refusant une communication NFC, ou en refusant de transmettre des données secrètes et/ou sensibles.

Il existe, en outre, plusieurs types de trames d'interrogations, qui sont définis par la norme ISO 14443, telles que les trames de type A, B et F, définis par des protocoles nommés de la même façon A, B et F. Il est possible, grâce à ces protocoles, de permettre l'utilisation de certaines commandes telles que des commandes de type WUPA ou WUPB à la place de commande de type ReqA et ReqB, ces types de commande étant également définis par la norme ISO 14443. L'utilisation de telles commandes permet, en outre, de caractériser le type de terminal émettant une trame d'interrogation.

Le terminal 101 est un dispositif électronique qui peut être, par exemple, fixe ou mobile. C'est le terminal 101 qui est en charge d'amorcer la communication. A titre d'exemple, le terminal 101 est un dispositif électronique adapté à mettre en oeuvre une application de transaction en tant que terminal de la transaction. Selon un exemple plus détaillé, le terminal 101 est un téléphone mobile, par exemple un téléphone intelligent (connu sous la dénomination anglaise smartphone) mettant en oeuvre une application point de vente (POS - Point of Sale), c'est-à-dire une application lui permettant de mettre en oeuvre une transaction en tant que terminal. Selon un autre exemple, le terminal 101 pourrait être un dispositif connecté, comme une montre connectée, adapté à mettre en oeuvre une communication en champ proche, et plus particulièrement une transaction NFC. Selon un autre exemple, le terminal 101 peut être un terminal de paiement mettant en oeuvre une application point de vente.

Le module distant 103 est un dispositif généralement mobile. Selon un mode de réalisation préféré, le module distant 103 est une carte à microcircuits (ou carte à puce), par exemple une carte bancaire ou une carte de transport. A titre de variante, le module distant 103 pourrait être un téléphone mobile. Le module distant 103 comprend différents circuits électroniques adaptés à mettre en oeuvre diverses commandes envoyées par le terminal 101, comme par exemple, des circuits d'authentification, des circuits de cryptographie, etc.

Dans les systèmes récents, un même dispositif NFC peut opérer en mode carte ou en mode lecteur (par exemple dans le cas d'une communication en champ proche entre deux téléphones mobiles), et peut choisir, selon le cas, s'il fonctionne en mode carte ou en mode lecteur. Selon un exemple, le module 101 pourrait être utilisé comme lecteur ou terminal adapté à mettre en oeuvre une transaction de paiement, et, dans un autre cas, être utilisé comme carte, par exemple, pour valider un titre de transport.

De plus, certains terminaux peuvent avoir des comportements spécifiques dans les cas où, suite à l'émission d'une trame d'interrogations, plusieurs modules distants voulant entamer une communication NFC sont détectés. Selon un exemple, ces terminaux peuvent détecter lesdits plusieurs modules distants grâce aux protocoles qu'ils mettent en oeuvre une fois des réponses reçues de la part de ces modules distants.

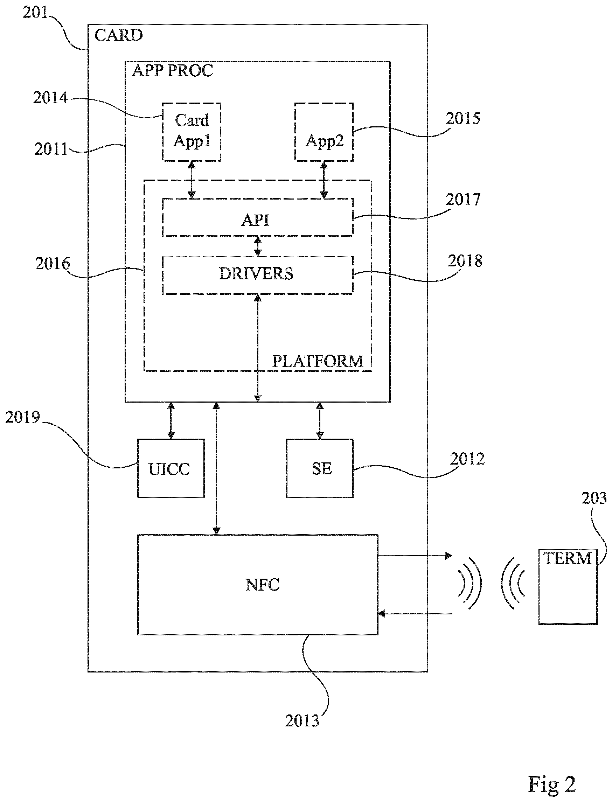

La figure 2 représente, schématiquement mais plus en détails, et sous forme de blocs, un mode de réalisation d'une transaction NFC, du type de celle décrite en relation avec la figure 1, entre un dispositif électronique 201 (CARD) utilisé en mode carte, ou dispositif carte 201, et un terminal 203 (TERM). La figure 2 illustre plus en détails la structure matérielle (en traits pleins) et logicielle (en traits pointillés) du dispositif carte 201, le terminal 203 étant identique au terminal 103 décrit en relation avec la figure 1.

Le dispositif carte 201 comprend, au moins :
- un processeur 2011 (APP PROC) ;
- un élément sécurisé (SE) 2012 ;
- un module de communication en champ proche (NFC) 2013 ; et
- une carte universelle de circuit intégré 2019.

Le processeur 2011 est un processeur adapté, entre autres, à mettre en oeuvre une architecture logicielle du dispositif carte 201, décrite ci-après.

L'élément sécurisé 2012 est un circuit ou un composant sécurisé, par exemple, un processeur, ou une unité de calcul, adapté à manipuler des données secrètes, ou données confidentielles. L'élément sécurisé est distinct du processeur 2011. L'élément sécurisé 2012 peut, par exemple, mettre en oeuvre des algorithmes d'authentification, de chiffrement et/ou de déchiffrement de données, de génération de clé de chiffrement et/ou de déchiffrement, etc. Selon un exemple, l'élément sécurisé 2012 est un élément sécurisé embarqué dans le dispositif carte 201, mais, selon une variante, l'élément sécurisé 2012 peut être un élément sécurisé intégré au terminal 203. L'avantage d'avoir un élément sécurisé embarqué ou intégré est que cela permet d'avoir un haut niveau de protection, puisque l'élément sécurisé fait partie du dispositif 100. Selon encore une autre variante, l'élément sécurisé 2012 peut faire partie d'une plateforme sécurisée qui l'isole physiquement des autres composants du dispositif 201, ou l'élément sécurisé 2012 peut être combiné au processeur 2011 en bénéficiant d'une partie matérielle qui l'isole physiquement du processeur 2011, par exemple en utilisant une technologie de type TrustZone. Ces deux dernières variantes présentent un niveau de protection plus bas que les variantes précédentes. Selon un mode de réalisation, l'élément sécurisé 2012 est capable de savoir si une transaction NFC est une transaction pendant laquelle des informations et des données sensibles peuvent être échangées.

Le module de communication en champ proche 2013, ou module NFC 2013, est un ensemble de circuits et d'une ou plusieurs antennes, permettant au dispositif carte 201 de mettre en oeuvre une communication en champ proche, et, en particulier, une transaction NFC du type de celle décrite en relation avec la figure 1. Selon un mode de réalisation, le module NFC comprend au moins un circuit d'antenne. Le module NFC permet donc d'envoyer et de recevoir des données, comme les circuits 105 décrits en relation avec la figure 1. Selon un exemple, le module NFC 2013, ou son circuit d'antenne, est configurée pour identifier le type de terminal émettant une trame d'interrogation en analysant une trame d'interrogation qu'il capte. Plus particulièrement, le module NFC est adapté à analyser les données véhiculées par la trame d'interrogation, ses caractéristiques temporelles, et/ou les caractéristiques techniques du champ électromagnétique transmettant la trame. Selon un mode de réalisation, le module NFC 2013 est, en outre, adapté à comparer le type de terminal qui a été déterminé au préalable avec une commande reçue par la suite de la part dudit terminal. Selon une variante, c'est l'élément sécurisé qui est adapté à comparer le type de terminal déterminé au préalable par le module NFC 2013 avec une commande reçue par la suite de la part dudit terminal.

La carte de circuit intégré universelle 2019 (UICC, Universal integrated circuit card) est une carte à circuit intégré utilisée dans des dispositifs électroniques pour stocker, de façon sécurisée, toutes sortes de données sensibles, secrètes, et/ou personnelles. La carte de circuit intégré universelle 2019 est optionnelle ici.

Ces quatre éléments sont adaptés à communiquer entre eux par différents moyens de communication. Selon un exemple, le processeur 2011 est adapté à communiquer avec le module NFC 2013, par exemple, par l'intermédiaire d'un bus de type I2C (Inter Integrated Circuit), d'un bus de type SPI (Serial Peripheral Interface), ou d'un bus de type UART (Universal Asynchronous Receiver Transmitter). Selon un exemple, le processeur 2011 est adapté à communiquer avec l'élément sécurisé 2012, par exemple, par l'intermédiaire d'un bus de type I2C (Inter Integrated Circuit) ou d'un bus de type SPI (Serial Peripheral Interface). Selon un exemple, l'élément sécurisé 2012 est adapté à communiquer avec le module NFC 2013, par exemple, par l'intermédiaire d'un bus de type SWP (Single Wire Protocol) en utilisant, par exemple, un protocole de communication de type HCI (Host-Controller Interface) ou un protocole de communication de type CLT (ContactLESS), ou, par exemple, par l'intermédiaire d'une mémoire de données partagée en utilisant un mécanisme de communication de type IPC (Inter-Process Communication). Pour communiquer ensemble, l'élément sécurisé 2012 et le module NFC 2013 peuvent, par exemple, utiliser un protocole de communication de type VNP (VPP Network Protocol, VPP signifiant Virtual Primary Platform), un tel protocole peut être utilisé avec un bus de type I2C ou de type SPI. Selon un exemple, le processeur 2011 est adapté à communiquer avec la carte 2019, par exemple, en utilisant, par exemple, un protocole de communication de type ISO7816. Selon un exemple, la carte 2019 est adaptée à communiquer avec le module NFC 2013, par exemple, par l'intermédiaire d'un bus de type SWP (Single Wire Protocol).

Par ailleurs, le dispositif carte 201, et plus particulièrement le processeur 2011, est adapté à mettre en oeuvre différents logiciels lui permettant d'exécuter différentes fonctionnalités, dont, plus particulièrement, celle d'engager et d'effectuer une transaction NFC avec un autre dispositif électronique, comme le terminal 203. L'architecture logicielle du dispositif carte 201, et plus précisément du processeur 2011, comprend différentes applications permettant à un utilisateur de mettre en oeuvre différentes fonctionnalités et plusieurs couches logicielles d'interface 2016 (PLATFORM), ou des logiciels d'interface 2016 permettant de traduire les commandes envoyées par les applications en commandes interprétables par les différents circuits et composants du dispositif carte 201, comme l'élément sécurisé 2012 et le module NFC 2013. Selon un mode de réalisation, les couches logicielles 2016 qui permettent le fonctionnement de l'application 2014 sont capables de savoir si une transaction NFC est une transaction pendant laquelle des informations et des données sensibles peuvent être échangées, ou non. De plus, selon une variante, ce sont les couches logicielles 2016 qui sont adaptées à comparer le type de terminal déterminé au préalable par le module NFC 2013 avec une commande reçue par la suite de la part dudit terminal.

En figure 2, le dispositif carte 201 est adapté à mettre en oeuvre au moins une application 2014 (Card App) dont la fonctionnalité est, entre autres, de mettre en oeuvre une transaction NFC du type de celle décrite en relation avec la figure 1 en tant que carte. L'application 2014 peut être une application stockant des informations liées à une carte comme une carte de paiement ou une carte de transport. Selon un exemple, le dispositif carte 201 peut mettre en oeuvre une ou plusieurs autres applications 2015 (App 2). On appelle dans cette description "application" un logiciel dont la manipulation est accessible à l'utilisateur du dispositif carte 201. Pour mettre en oeuvre les différentes fonctionnalités du dispositif carte 201, les applications sont adaptées à utiliser les différents circuits et composants du dispositif carte 201 en envoyant des commandes aux couches logicielles d'interface 2016.

Les couches logicielles d'interface 2016 comprennent :
- une couche d'interface primaire 2017 (API) ; et
- une couche de commande 2018 (DRIVERS) des circuits et composants du dispositif carte 201.

La couche d'interface primaire 2017 est une interface logicielle recevant directement les ordres d'opérations à réaliser provenant des applications 2014 et 2015 et qui convertit ces opérations en une série de commandes adaptées aux différents circuits et composants du dispositif carte 201. Autrement dit, si une application envoie l'ordre de réaliser une opération requêtant l'utilisation de plusieurs circuits ou composants du dispositif carte 201, l'interface 2017 convertit cet ordre en un ensemble de commandes. Une opération peut être réalisée en mettant en oeuvre une ou plusieurs commandes à destination d'un ou plusieurs circuits ou composants du dispositif carte 201.

La couche de commande 2018 des circuits et composants du dispositif carte 201 est l'ensemble des logiciels de commande des circuits et composants 201, c'est-à-dire les logiciels pilotant les circuits et composants du dispositif carte 201. Autrement dit, la couche de commande 2018 est l'ensemble des programmes permettant de mettre en oeuvre les commandes fournies par l'interface 2017. Chaque circuit ou composant est associé à un logiciel de commande adapté à le mettre en oeuvre. Ces logiciels de commande sont communément appelés logiciels pilote, ou "driver".

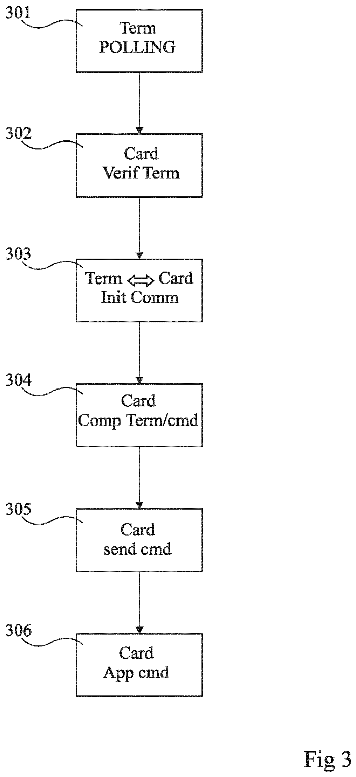

La figure 3 est un schéma bloc illustrant des étapes d'un mode de mise en oeuvre d'un premier procédé de protection d'un dispositif électronique pendant la mise en oeuvre d'une transaction NFC du type de la transaction NFC décrite en relation avec la figure 1. Ces étapes sont exécutées par le dispositif carte 201 et le terminal 203 décrits en relation avec la figure 2.

A une étape 301 (Term POLLING), le terminal 203 cherche à initier une transaction NFC et commence à émettre une trame d'interrogation POLLING.

A une étape 302 (Card Verif Term), le dispositif carte 201 est mis à portée du terminal 203 et capte la trame d'interrogation POLLING. Dit autrement, la trame d'interrogation POLLING est capté par le circuit d'antenne du module NFC 2013 du dispositif carte 201. Selon un mode de réalisation, le module NFC 2013 effectue alors une analyse de la trame d'interrogation POLLING pour identifier le type du terminal 203, comme décrit précédemment en relation avec la figure 2. Pour effectuer cette analyse, le module NFC 2013, ou son circuit d'antenne, se base sur les caractéristiques de la trame d'interrogation, c'est-à-dire les données et/ou les commandes qu'elle transmet, ses caractéristiques temporelles, et/ou les caractéristiques du champ électromagnétique qui la transmet. De plus, selon un exemple, pour effectuer cette analyse, le module NFC 2013 peut, en outre, se baser sur une séquence de commandes suivant la trame d'interrogation. Selon une variante, cette analyse de la trame d'interrogation peut être mise en oeuvre par le circuit d'antenne du module NFC 2013.

Le module NFC 2013 peut, à ce moment-là, déterminer, par exemple, si le terminal 203 émet une trame d'interrogation POLLING, ou séquence d'interrogation POLLING, correspondant à une norme connue, ou si le terminal 203 émet une trame d'interrogation POLLING ne correspondant pas à une norme connue, ou correspondant à une autre norme, ou bien correspondant à un terminal malveillant. Selon un exemple pratique, une trame d'interrogation définie pour un terminal de type terminal de paiement, est différente d'une trame d'interrogation définie pour des terminaux respectant les protocoles d'émission de trames d'interrogations définis dans la norme NFC-Forum. Le module NFC stocke le résultat de son analyse, ou l'envoie à l'élément sécurisé 2012 ou aux couches logicielles 2016, en fonction de quel élément logiciel du dispositif gère la transaction NFC.

A une étape 303 (Term <-> Card Init Comm), une transaction NFC est initiée entre le dispositif carte 201 et le terminal 203. Autrement dit, le dispositif carte 201 répond à la trame d'interrogation POLLING, sans toutefois fournir de données sensibles et/ou secrètes.

A une étape 304 (Card Comp Term/cmd), le terminal 203 envoie alors une ou plusieurs commandes au dispositif carte 201, ces commandes sont à destination de l'application 2014 mise en oeuvre par le dispositif carte 201. Le dispositif carte 201 réalise alors une comparaison de la ou les commandes reçues de la part du terminal 203 avec le résultat de l'analyse effectuée par le module NFC 2013 réalisée à l'étape 302, ou par son circuit d'antenne le cas échéant. Cette comparaison peut être mise en oeuvre par le module NFC 2013 ou par l'élément sécurisé 2012 du dispositif carte 201.

Une telle comparaison peut permettre de vérifier si la commande reçue par le dispositif carte 201 correspond bien à une commande, ou à une séquence de commande, qu'enverrait généralement un terminal du type du terminal 203. Autrement dit, une telle comparaison peut permettre de révéler un dispositif malveillant essayant de mettre en oeuvre une transaction NFC, par exemple , une transaction NFC pendant laquelle des données sensibles et/ou secrètes sont échangées. Selon un exemple précis, une telle comparaison peut permettre d'éviter à un dispositif carte de mettre en oeuvre une transaction bancaire avec un terminal essayant de se faire passer pour un terminal de paiement classique.

A une étape 305 (Card send cmd), la comparaison ayant été réalisée, la ou les commandes sont transmises à l'application 2014, par exemple, par le module NFC 2013 ou par l'élément sécurisé 2012. Selon un mode de réalisation, le résultat de la comparaison effectuée à l'étape 304 est également transmise à l'application, par exemple, par l'élément ayant réalisé cette comparaison, c'est-à-dire le module NFC 2013 ou l'élément sécurisé 2012. De plus, et selon un exemple, le résultat de l'analyse effectuée à l'étape 302 est également transmise à l'application, par exemple, par le module NFC 2013 ou par l'élément sécurisé.

A une étape 306 (Card App Cmd), l'application reçoit la ou les commandes ainsi que le résultat de la comparaison, et, le cas échéant le résultat de l'analyse du type du terminal 203. C'est à l'application de prendre la décision en fonction de tous ces éléments de savoir comment répondre à la ou les commandes reçues.

Selon un premier exemple, le résultat de l'analyse indique que le terminal 203 est un terminal classique utilisé pour effectuer une transaction NFC, et le résultat de la comparaison indique que la ou les commandes sont classiques également. L'application 2014 peut, dans ce cas, décider de faire confiance au terminal 203 et de répondre à la ou aux commandes, ou peut très bien, au contraire, décider de ne pas répondre à la ou aux commandes, ou décider de ne répondre qu'à certaines des commandes reçues, ou de répondre avec des données erronées.

Selon un deuxième exemple, le résultat de l'analyse indique que le terminal 203 est un terminal classique utilisé pour effectuer une transaction NFC, mais le résultat de la comparaison indique que la ou les commandes ne sont pas des commandes classique pour ce type de terminal 203. L'application 2014 peut, dans ce cas, décider de faire confiance au terminal 203 et de répondre à la ou aux commandes, ou peut très bien, au contraire, décider de ne pas faire confiance au terminal 203, et donc de ne pas répondre à la ou aux commandes reçues, ou de répondre avec des données erronées.

Selon un troisième exemple, le résultat de l'analyse indique que le terminal 203 n'est pas un terminal classique ou n'est pas un terminal dont le type est connu du dispositif carte 201, et le résultat de la comparaison indique donc que la ou les commandes ne sont pas fiables. L'application 2014 peut, dans ce cas, décider de ne pas faire confiance au terminal 203 et de ne pas répondre à la ou aux commandes, ou peut, par exemple, décider de répondre aux commandes avec des données erronées. Selon un autre exemple, l'application 2014 peut décider d'ignorer ces résultats de répondre quand même à la ou aux commandes du terminal 203.

Selon un quatrième exemple, le résultat de l'analyse pourrait être incertain, et l'application pourrait interroger l'utilisateur du dispositif pour valider l'envoi des données, par exemple en utilisant un bouton, la vérification d'un mot de passe, et/ou une vérification biométrique, etc.

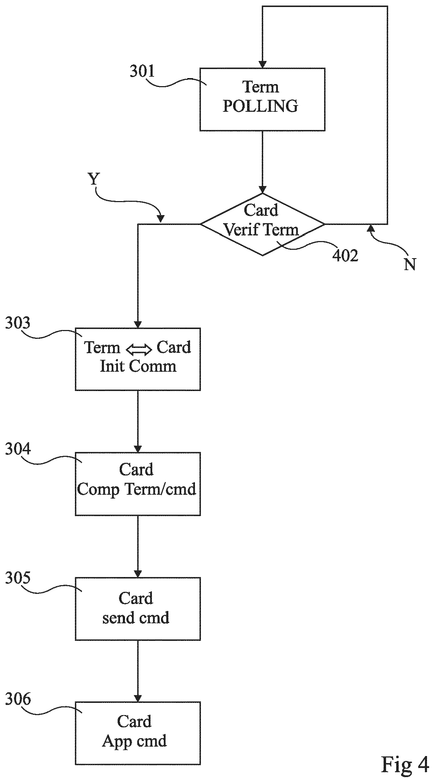

La figure 4 est un schéma bloc illustrant des étapes d'un mode de mise en oeuvre d'un deuxième procédé de protection d'un dispositif électronique pendant la mise en oeuvre d'une transaction NFC du type de la transaction NFC décrite en relation avec la figure 1. Ces étapes sont exécutées par le dispositif carte 201 et le terminal 203 décrits en relation avec la figure 2.

Le procédé décrit en relation avec la figure 4 présente des étapes communes avec le procédé décrit en relation avec la figure 3. Les étapes communes aux deux procédés ne sont pas décrites de nouveau en détails, et seules les étapes différentes sont mises en exergue ici.

Le procédé de la figure 4 comprend les étapes suivantes :
- l'étape 301 (Term POLLING) ;
- l'étape 303 (Term <-> Card Init Comm) ;
- l'étape 304 (Card Comp Term/cmd) ;
- l'étape 305 (Card send cmd) ; et
- l'étape 306 (Card App Cmd).

L'étape 302 du procédé de la figure 3 est remplacée par une étape 402 ayant lieu entre les étapes 301 et 303.

A l'étape 402 (Card Verif Term), le dispositif carte 201 est mis à portée du terminal 203 et capte la trame d'interrogation POLLING. Dit autrement, la trame d'interrogation POLLING est capté par le circuit d'antenne du module NFC 2013 du dispositif carte 201. Selon un mode de réalisation, le module NFC 2013 effectue alors une analyse de la trame d'interrogation POLLING pour identifier le type du terminal 203. Pour effectuer cette analyse, le module NFC 2013, ou son circuit d'antenne, se base sur les caractéristiques de la trame d'interrogation, c'est-à-dire les données et/ou les commandes qu'elle transmet, ses caractéristiques temporelles, et/ou les caractéristiques du champ

électromagnétique qui la transmet. Selon une variante, cette analyse de la trame d'interrogation peut être mise en oeuvre par le circuit d'antenne du module NFC 2013.

Selon un mode de réalisation, Le module NFC 2012 peut alors être utilisé comme un filtre, et prendre la décision d'initier ou non une transaction NFC avec le terminal 203. Si le résultat de l'analyse indique que le terminal 203 est un terminal classique ou est un terminal fiable (sortie Y de l'étape 402), l'étape suivante est l'étape 303. Si le résultat de l'analyse indique que le terminal 203 est un terminal non fiable (sortie N de l'étape 402), l'étape suivante est l'étape 301, autrement dit le terminal 203 continue à chercher un dispositif pour effectuer une transaction NFC en émettant sa trame d'interrogation, et le dispositif carte 201 ne répond pas à cette trame d'interrogation même s'il continue de la capter.

Selon une variante de réalisation, si le résultat de l'analyse indique que le terminal 203 est un terminal non fiable, le module NFC 2012 peut envoyer des données erronées au terminal 203 en guise de réponse à la trame d'interrogation.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Dispositif électronique (201) comprenant un processeur (2011) hébergeant une application (2014), un module de communication en champ proche (2012), et un élément sécurisé (2012) distinct du processeur (2011), dans lequel le module de communication en champ proche (2012) est configuré pour identifier le type d'un terminal (203) émettant une trame d'interrogation (POLLING), à destination de ladite application (2014), que le module de communication reçoit en analysant le type de ladite trame d'interrogation (POLLING), ledit dispositif (201) étant configuré pour comparer le résultat de ladite analyse avec au moins une commande reçue de la part dudit terminal (203) pendant la mise en oeuvre d'une transaction NFC.

2. Procédé de protection d'un dispositif électronique comprenant un processeur (2011) hébergeant une application (2014), un module de communication en champ proche (2012), et un élément sécurisé (2012) distinct du processeur (2011), ledit procédé comprenant les étapes successives suivantes lors de la mise en oeuvre d'une transaction :
- ledit module de communication en champ proche (2012) identifie le type d'un terminal (203) émettant une trame d'interrogation (POLLING), à destination de ladite application (2014), que le module de communication reçoit en analysant le type de ladite trame d'interrogation (POLLING) ;
- ledit dispositif compare le résultat de ladite analyse avec au moins une commande reçue de la part dudit terminal (203) pendant la mise en oeuvre d'une transaction NFC.

3. Dispositif selon la revendication 1, ou procédé selon la revendication 2, dans lequel, une fois que ladite comparaison est effectuée, ladite au moins une commande est transmise à ladite application (2014) avec le résultat de la comparaison.

4. Dispositif ou procédé selon la revendication 3, dans lequel, une fois que ladite comparaison est effectuée, le résultat de ladite analyse est transmis à l'application avec ladite au moins une commande et ledit résultat de la comparaison.

5. Dispositif l'une quelconque des revendications 1, 3 ou 4, ou procédé selon l'une quelconque des revendications 2 à 4, dans lequel ladite application (2014) est configurée pour prendre la décision de répondre ou non à ladite au moins une commande.

6. Dispositif l'une quelconque des revendications 1, 3 à 5, ou procédé selon l'une quelconque des revendications 2 à 5, dans lequel ledit module de communication en champ proche (2012) comprend un circuit d'antenne adapté aux radiofréquences, ledit circuit étant configuré pour identifier le type d'un terminal (203) émettant une trame d'interrogation (POLLING), à destination de ladite application (2014), qu'il reçoit en analysant le type de ladite trame d'interrogation (POLLING).

7. Dispositif l'une quelconque des revendications 1, 3 à 6, ou procédé selon l'une quelconque des revendications 2 à 6, dans lequel ledit élément sécurisé (2012) est configuré pour comparer le type de terminal (203) avec ladite au moins une commande reçue.

8. Dispositif l'une quelconque des revendications 1, 3 à 6, ou procédé selon l'une quelconque des revendications 2 à 6, dans lequel ledit module de communication en champ proche (2012) est, en outre, configuré pour comparer le type de terminal (203) avec ladite au moins une commande reçue.

9. Dispositif l'une quelconque des revendications 1, 3 à 8, ou procédé selon l'une quelconque des revendications 2 à 8, dans lequel ledit module de communication en champ proche (2012) est, en outre, configurée pour envoyer des données erronées à l'expéditeur si le résultat de ladite comparaison indique que le type de l'expéditeur n'est pas fiable.

10. Dispositif l'une quelconque des revendications 1, 3 à 9, ou procédé selon l'une quelconque des revendications 2 à 9, dans lequel, si le résultat de ladite comparaison indique que le type de l'expéditeur n'est pas fiable, ladite au moins une application (2014) refuse d'envoyer des données sensibles.

11. Dispositif l'une quelconque des revendications 1, 3 à 10, ou procédé selon l'une quelconque des revendications 2 à 10, dans lequel ladite comparaison est réalisée en comparant ledit résultat de ladite analyse avec au moins deux commandes reçues de la part dudit terminal (203) pendant la mise en oeuvre d'une transaction NFC.

12. Dispositif l'une quelconque des revendications 1, 3 à 11, ou procédé selon l'une quelconque des revendications 2 à 11, dans lequel ladite comparaison est réalisée, en outre, en interrogeant un utilisateur dudit dispositif.

13. Dispositif l'une quelconque des revendications 1, 3 à 12, ou procédé selon l'une quelconque des revendications 2 à 12, dans lequel ledit processeur (2011) héberge, en outre, au moins une couche logicielle d'interface (2016) adaptée à mettre en oeuvre ladite au moins une application (2014).
